# EUROPEAN PATENT APPLICATION

(11) **EP 4 822 628 A1**
(43) Date of publication of application: **14.10.2026**
(21) Application number: 25169785.0
(22) Date of filing: 10.04.2025
(51) Int. Cl.: G06Q 20/02, G06Q 20/36, G06Q 20/38

(54) **PROCESSING OF SERVICE REQUESTS IN A PAYMENT NETWORK**

(71) Applicant: Mastercard International, Inc., Purchase, NY 10577 (US)
(72) Inventor: Gallo, Francesco, 8045 Graz (AT); Johnson, Alan, Maldon, CM9 8HW (GB)
(74) Representative: Gill Jennings & Every LLP

(57) **Abstract**

Techniques are disclosed for processing service requests in a payment network. A receiving server that cannot process a service request identifies another server within the payment network that can process the service request based on some digits extracted from sensitive numerical data contained within the service request. The receiving server responds to the service request with a redirect message including an address of the server that can process the service request. The redirect message also includes a numerical range corresponding to service requests that the server can process. A merchant device stores the numerical range and address information in a lookup table such that future service requests can be routed according to the lookup table. Optionally, the redirect message is a HTTP 302 response, the sensitive numerical data is a PAN, the group of digits is a BIN or IIN and the numerical range is an account range.

## Description

### FIELD OF INVENTION

This invention relates to handling of service requests in a payment network, and in particular to techniques for directing a service request to an appropriate server within a payment network based on content of the service request.

### BACKGROUND

It is often the case that a payment network is required to process a service request on behalf of a merchant device. For example, a merchant device may submit a service request to obtain a token from a payment network for subsequent use by the merchant device, e.g. in a payment process.

Such service requests often include sensitive data, e.g. a card primary account number (PAN). Data security and/or data sovereignty requirements place restrictions on handling of sensitive data, e.g. a service involving a PAN may be required to be performed in a particular jurisdiction or under the control of a particular party.

Back-end components of payment networks, i.e. servers that process service requests, are typically geographically distributed. That is, a single payment network can include multiple servers respectively located in multiple different jurisdictions. In this configuration, it is difficult to ensure that data security and/or data sovereignty requirements are met. This is because a merchant device requesting a service does not know which server within the payment network is a) capable of processing the service request of the merchant device and b) authorised to process the service request. Instead, the merchant device typically directs service requests to a single server within the payment network that is known to the merchant device, e.g. via documentation provided by the payment network operator during set up of the merchant device. This server may not be authorised or capable of processing service requests from the merchant device.

Existing payment systems handle this scenario in one of two ways. Some payment networks simply do not process service requests received by a payment network server that is incapable of processing the service request and/or not authorised to process the service request. This results in many service requests remaining unprocessed, which is clearly undesirable.

Other payment networks perform network-side handling of service requests that the server originally in receipt of the service request cannot process. Network-side handling typically involves a first server within the payment network that receives a first service request that it is unable to process determining a second server within the payment network that is able to process the service request. The first server then generates a second service request based on the first service request, transmits the second service request to the second server for processing and returns the response received from the second server to the merchant device that send the first service request. In this case, from the merchant device's perspective the first server successfully processed the service request.

While this technique is an improvement in that the processing rate of merchant requests is higher than the case where some service requests are simply denied, this solution is still not ideal. This is because generation of new service requests by servers within the payment network consumes computational resources of the payment network. The generation of new service requests also introduces additional latency from the perspective of the merchant device, since the merchant device must wait the additional time necessary for the first server to generate the new service request, transmit it to the second server and wait for the reply from the second server. Furthermore, a given merchant device tends to direct all its service requests to a particular server within the payment network, making it difficult for load balancing to be performed across the payment network.

Attempts have been made to provide information to merchants (or entities operating on their behalf) indicating which server(s) can process particular service requests. However, this information is provided in an ad-hoc manner and relies on merchants manually updating their records. As a result, it has been found that such techniques at best result in small improvements only and at worst create additional work for merchants with no improvement in service.

Therefore, there is a need for a technique that can improve the handling of service requests by a payment network such that service requests are handled in an efficient manner that also respects data security and data sovereignty requirements.

### SUMMARY OF THE INVENTION

Techniques are disclosed for processing service requests in a payment network. A receiving server that cannot process a service request identifies another server within the payment network that can process the service request based on some digits extracted from sensitive numerical data contained within the service request. The receiving server responds to the service request with a redirect message including an address of the server that can process the service request. The redirect message also includes a numerical range corresponding to service requests that the server can process. A merchant device stores the numerical range and address information in a lookup table such that future service requests can be routed according to the lookup table. Optionally, the redirect message is a HTTP 302 response, the sensitive numerical data is a PAN, the group of digits is a BIN or IIN and the numerical range is an account range.

In a first aspect, the invention provides a computer-implemented method for processing a service request in a payment network, the method comprising: generating, by a merchant device, a first request message as part of a first service request, the first request message comprising an address of a first server and first sensitive numerical data; transmitting, by the merchant device, the first request message to the address of the first server; receiving, by the merchant device, a redirect message from the first server in response to the first request message, the redirect message including an address of a second server and a numerical range, wherein a number formed by extracting a sequence of digits from the first sensitive numerical data is within the numerical range; responsive to receiving the redirect message, sending, by the merchant device, the first request message to the address of the second server; receiving, by the merchant device, a first service response message from the second server; and storing, by the merchant device in a lookup table, the address of the second server in association with the numerical range.

In a second aspect, the invention provides a computer-implemented method for processing a service request in a payment network, the method comprising: receiving, by a first server of a payment network, a first request message from a merchant device as part of a first service request, the first request message comprising an address of the first server and first sensitive numerical data; determining, by the first server based on the first sensitive numerical data, that the first server is unable to process the service request; identifying, by the first server based on the first sensitive numerical data, a second server of the payment network that is able to process the service request; and transmitting, by the first server to the merchant device, a redirect message as a response to the first request message, the redirect message including an address of the second server and a first numerical range, wherein a number formed by extracting a sequence of digits from the first sensitive numerical data is within the first numerical range.

Further preferred features of the invention are set out in the appended dependent claims.

### BRIEF DESCRIPTION OF THE DRAWINGS

Figure 1 is a schematic diagram of a system capable of implementing embodiments of the invention.
Figure 2 is a flow diagram of a method performed by a merchant device according to an embodiment of the invention.
Figure 3 is a flow diagram of a method performed by a merchant device according to an embodiment of the invention.
Figure 4 is a flow diagram of a method performed by one or more payment network servers according to an embodiment of the invention.

### DETAILED DESCRIPTION OF EMBODIMENTS

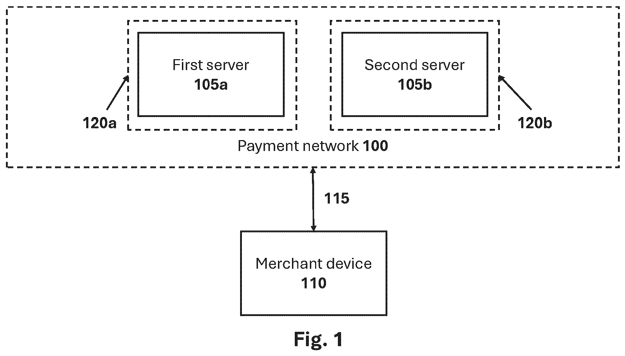

Referring to Fig. 1, a system capable of implementing embodiments of the invention is shown. The system includes a payment network 100 that comprises first server 105a and second server 105b. First server 105a and second server 105b are configured to process certain service requests originating from merchant device 110. Merchant device 110 is configured to communicate with payment network 100 via a communication channel 115.

Payment network 100 can be a cloud-based network in which first server 105a and second server 105b are physical or virtual machines within a cloud environment operated by, or on behalf of, a payment network operator. Such configurations are known per se and so further description is not provided here.

Merchant device 110 can be any merchant device known in the art, e.g. a point-of-sale (POS) device, a merchant-operated mobile phone or tablet, etc. Merchant devices of this type are known per se and so further description is not provided here.

Communication channel 115 can be any channel capable of carrying service request-related messages, e.g. a channel established via the internet. Such communication channels are known in the art and thus further details are not provided here.

First server 105a is located in a first security zone 120a and second server 105b is located in a second security zone 120b. Here, 'located in' refers to a physical location or a logical location. Each security zone can be a particular jurisdiction, e.g. a country, state or other such geographical region, or a particular network location having a particular security configuration, e.g. a network location bounded by a firewall or similar. First security zone 120a and second security zone 120b differ in that first server 105a is authorised to process service requests that second server 105b is not authorised to process, and vice versa.

It will be appreciated that payment network 100 can include more than two servers, e.g. three servers, four servers, or many more servers, each within their own respective security zones. The number of servers in payment network 100 is therefore not limited. The number of servers in payment network 100 need not be static as server instances can be dynamically initialised or shut down responsive to load conditions on the payment network 100, as is known per se in the art.

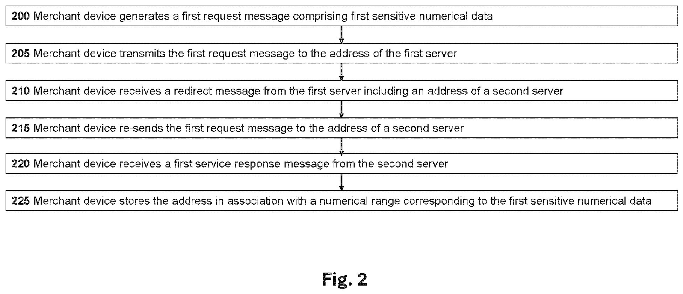

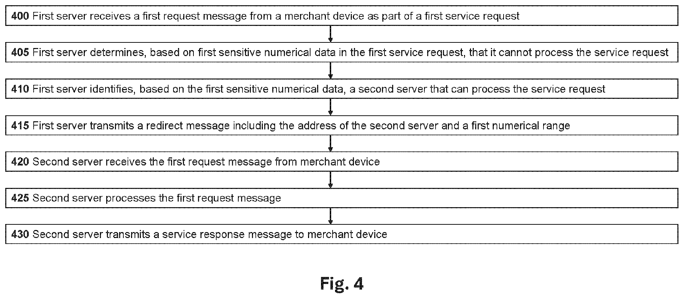

Referring now to Fig. 2, a method for processing a service request according to an embodiment is shown. This method is described from the perspective of merchant device 110. A corresponding method for processing a service request from the perspective of a payment network is discussed later in connection with Fig. 4.

In step 200, merchant device 110 generates a first request message as part of a first service request, the first request message comprising an address of a first server and first sensitive numerical data. The service request can be any request for a service provided by payment network 100. An example of a service provided by payment network 100 is a tokenisation service in which payment network 100 provides a token to merchant device 110.

The address of the first server can be an address of any server of payment network 100. The non-limiting example of first server 105a is used in the following description for ease of understanding.

The term 'address' refers to any information that can be used to direct the first request message such that the first request message is routed to first server 105a. An example of an address is a uniform resource locator (URL), but this is not limiting as other forms of address such as a uniform resource identifier (URI), an IP address, a MAC address etc. can alternatively be used.

The first sensitive numerical data can be any numerical data that is subject to data security and/or data sovereignty requirements. A non-limiting example of the first sensitive numerical data is a Primary Account Number (PAN) or a part thereof. As is known in the art, a PAN takes the form of a string of numbers that is typically 16 digits long, e.g. 2123 4567 8901 2345. PANs of other lengths, e.g. in the range of 14 to 19 digits long, are also possible. The first sensitive numerical data is thus formed of a string of digits (i.e. integers) having some length, e.g. in the range of 14 to 19 digits.

In some embodiments both the full PAN is present but encrypted and a partial PAN is present but not encrypted - e.g. the first six or eight digits (i.e. the BIN or IIN) can be transmitted in clear text whilst the full PAN is transmitted in ciphertext. Extracting the BIN / IIN in this context can thus refer to directly obtaining the clear text BIN / IIN directly from the partial PAN, without decrypting the encrypted PAN. This approach can ensure data privacy and data sovereignty requirements are met because the PAN is transmitted in a manner such that only entities authorised to obtain the full PAN in cleartext can do so, whilst also allowing any entity to read the cleartext BIN / IIN and route the transaction accordingly.

The first request message may take the form of a HTTP GET request. HTTP GET requests per se are known in the art and thus further details are not provided here. It is sufficient for the purposes of this document to understand that the address of the first server can be included in the 'Host' portion of the GET request and the first sensitive numerical data can be included in the body of the GET request. An example of a HTTP GET request in the context of a service request for a token is as follows:

```
              JHW#2ruljlqdoOsdjh#KWWS2414#
              Krvw=#vhuyhubDlfrp#
              #
              ?kwpoA#
              ?erg|A#
              ý#
              ?FdugSDQA5456#789:#;<34#5678?2FdugSDQA#
              ý#
              ?2erg|A#
              ?2kwpoA#
```

Here, the first address is the URL "server_A.com" and the first sensitive numerical data is PAN "2123 4567 8901 2345". The remaining content of the body of the GET request is not shown as it is not of significance to the invention. It is sufficient to understand that the remaining content of the body of the GET request can be populated according to the circumstances at hand, e.g. populated as specified by documentation provided by a payment network operator or according to a relevant standard.

The encoding of the GET request can be any known encoding formal, e.g. JSON, XML, etc.

In step 205, merchant device 110 transmits the first request message to the address of the first server. In the example above, merchant device 110 transmits the HTTP GET request containing the PAN "2123 4567 8901 2345" to first server 105a using the URL "server_A.com". The first request message can be transmitted via communication channel 115. Routing of the first request message is handled in a conventional manner, based on the address included in the first request message.

In step 210, merchant device 110 receives a redirect message from first server 105a in response to the first request message. The redirect message includes an address of a second server (in this case, second server 105b) and a numerical range, where a number formed by extracting a sequence of digits from the first sensitive numerical data is within the numerical range. The redirect message may also include a region of the second server, e.g. a country or state associated with the second server.

The redirect message has the function of a) indicating to merchant device 110 that first server 105a cannot process the service request and b) identifying another server within payment network 100 (in this case, second server 105b) that can process the service request.

First server 105a may be unable to process the service request because first server 105a is located in a security zone that prevents first server 105a from processing the service request, e.g. because first server 105a is not authorised to process the first sensitive numerical data or because first server 105a is not authorised to access / does not have access to a resource necessary to process the service request.

The address of second server 105b can be in the same format as the address of first server 105a, e.g. a URL/URI, IP address, MAC address etc. of second server 105b.

The numerical range is a range of numerical values that a number formed by extracting a sequence of digits from the first sensitive numerical data is within. Here, 'within' means that the number extracted from the first sensitive numerical data is greater than or equal to the lower bound of the numerical range and less than or equal to the upper bound of the numerical range.

Base 10 numerals are used in this discussion to represent the first sensitive numerical data but the invention is not restricted in this regard. Other systems of representing numerical data, e.g. binary or hexadecimal, can alternatively be used.

Extracting a sequence of digits from the first sensitive numerical data refers to taking some of the digits in sequence from the first sensitive numerical data. In the case where the length of the first sensitive numerical data is N digits, the extracted sequence of digits has a length M, where M is an integer satisfying 1 ≤ M < N - 1.

For example, if the first sensitive numerical data is "2123 4567 8901 2345" (N = 16), a sequence of digits extracted from the first sensitive numerical data could be "212345" (M = 6). The numerical range included in the redirect message in this example is thus any range that includes "212345", e.g. "200000 - 999999", "200000 - 300000", "210000 - 220000", etc. The size of the numerical range is not restricted by the invention and hence the size of the numerical range can be any value provided that the sequence of digits extracted from the first sensitive numerical data lies within the numerical range.

Typically the numerical range is defined using endpoints having the same number of digits as the sequence of digits extracted from the first sensitive numerical data. See the example in the immediately preceding paragraph where the endpoints of each exemplary numerical range have six digits. However, the invention is not restricted to this as range endpoints can be defined that have fewer or more digits than the extracted sequence of digits. For example, the range "0 - 1000000" could be used in the example above.

More generally, the sequence of extracted digits can start at the P^{th} digit of the first sensitive numerical data, where 1 ≤ P ≤ (N - M + 1) in the case of 1-based indexing of the first sensitive numerical data or 0 ≤ P ≤ (N - M) is the case of 0-based indexing of the first sensitive numerical data. In the example given above, 1-based indexing is used and thus P = 1. In another example using the exemplary first sensitive numerical data above in which M = 6 and P = 8 (using 1-based indexing), the sequence of extracted digits is "789012".

The first sensitive numerical data may be a PAN. In this case, the sequence of extracted digits can be a bank identification number (BIN) or an issuer identification number (IIN) as are known per se in the art. A BIN or IIN is typically a six- or eight-digit number starting with the first digit of the PAN. Thus in the example PAN "2123 4567 8901 2345" the BIN or IIN is typically either "212345" or "21234567". The numerical range in this case is an account range; that is, a range of BINs / IINs such as "200000 - 300000". An account range is bounded by a lowest BIN / IIN as a lower bound and a highest BIN / IIN as an upper bound. Account ranges per se are known in the art.

The discussion above assumes that a contiguous sequence of digits is extracted from the first sensitive numerical data. The invention is however not limited to this, as non-contiguous digits can be extracted from the first sensitive numerical data to form the number that lies within the numerical range. For example, the first to third and tenth to twelfth digits can be extracted from "2123 4567 8901 2345" to form the number "212901". In the case where the sequence of digits is non-contiguous, the requirements of the numerical range are the same as those discussed above.

The redirect message can be a Hypertext Transfer Protocol (HTTP) response message having response status code 302 as defined in the HTTP specification. In this case the redirect message is in the HTTP format and includes response code '302' and a URL/URI in a header field 'Location'. This URL/URI is the address of the second server as discussed above. An example of a HTTP 302 response is as follows:

```
              KWWS2414#635#Irxqg#
              Orfdwlrq=#kwws=22vhuyhubEllw#
              Dffrxqw0Udqjh=#533333##
              Uhjlrq=#Lwdo|#
```

Here, the address of the second server is "http://server_B.it" and the numerical range is "200000 to 999999". The upper bound of the numerical range is not explicitly specified in the redirect message in the illustrated embodiment and is implicitly set to one of: a) the maximum value that can be represented by the number of digits used to represent the numerical range, i.e. six digits in the example above giving an upper bound of the numerical range equal to 999999; or b) a predefined offset from the lower bound specified in the redirect message, e.g. a predefined offset of 300000 gives an upper bound of 500000 for the numerical range in the example above. The predefined offset can be obtained in advance by merchant device 110, e.g. from payment network 100, and stored in storage accessible to merchant device 110. Omission of the upper bound of the numerical range can advantageously reduce the size of the redirect message.

Alternatively, it is possible to explicitly specify the upper bound of the numerical range in the redirect message - in this case, the third line of the example HTTP 302 response above would instead be of the form "Dffrxqw0Udqjh=# 533333=qqqqqqŠ, where 'nnnnnn' is the upper bound of the numerical range (e.g. 999999). This latter approach improves flexibility as it is possible to specify any upper bound for the numerical range on a per-redirect message basis, not just the maximum number representable by six digits (or however many digits are being used to represent the numerical range) or the preset offset amount from the lower bound.

The 'region' data is optional and provides information about the security zone of the second server associated with the address. In this example a geographical region "Italy" is provided, but it is equally possible for a logical network location to be provided in the 'region' data.

It will be appreciated that a HTTP 302 response is not the only way that the redirect message can be implemented. The redirect message can comprise any format that performs the function of the redirect message discussed above.

It will be appreciated from the discussion above that the redirect message is received by merchant device 110 in the case where the first request message is addressed to a server of payment network 100 that is unable to process the service request. For example, first server 105a is unable to process the service request. Instead of receiving a denial-of-service response, merchant device 110 instead receives a redirect message that specifies an address of a second server (e.g. second server 105b) that is capable of processing the service request.

In step 215, responsive to receiving the redirect message, merchant device 110 resends the first request message to the address of the second server. In the case where the first request message is an HTTP GET request message, sending the first request message to the address of the second server can include modifying the 'Host' portion of the first request message to specify the address of the second server as shown in the example below in which the second server address is "http://server_B.it".

```
              JHW#2ruljlqdoOsdjh#KWWS2414#
              Krvw=#kwws=22vhuyhubEllw#
              #
              ?kwpoA#
              ?erg|A#
              ý#
              ?FdugSDQA5456#789:#;<34#5678?2FdugSDQA#
              ý#
              ?2ergIA#
              ?2kwpoA#
```

Appropriate modifications to request messages in other formats will be apparent to a person skilled in the art having the benefit of the present disclosure.

The redirect message may include a digital certificate or other similar data structure that enables merchant device 110 to verify the authenticity of the redirect message. In the case where redirect message verification is implemented and merchant device 110 cannot verify the authenticity of the redirect message, merchant device 110 may not perform step 215 or any subsequent steps and may instead generate an error indicating that the authenticity of the redirect message could not be verified. This serves as a security measure to guard against malicious redirects of merchant device 110, e.g. as may be attempted by a compromised server within payment network 100.

In step 220, merchant device 110 receives a first service response message from the second server, e.g. second server 105b. The format of the first service response message is not restricted by the present invention and can be essentially any format that provides a valid response to the first service request message.

For example, in the case where the first service request message is a request to obtain a token, the service response message can include a token and an indication that the service request has been approved.

In step 225, merchant device 110 stores the address of the second server in association with the numerical range in a lookup table. 'In association with' here refers to the address of the second server and the numerical range being stored such that they are linked to one another. Thus, a query on the numerical range can return the associated address of the second server. The association can be referred to as storing the address of the second server and the numerical range in the same record within the lookup table.

The lookup table can take any form that enables electronic data retrieval. For example, the lookup table can be a database table, e.g. a SQL table. An example lookup table is shown directly below, in which each row represents a record within the lookup table.

| **Numerical range** | **Second Address** | **Region** |
|---|---|---|
| 200000 | https://serverB.it | Italy |
| 500000 | https://serverC.at | Austria |
| 800000 | https://serverD.co.uk | UK |

In this example region data is also stored in the lookup table, but this is optional and the region data can be omitted.

A numerical range can be stored in the lookup table either as just a lower bound of the numerical range as shown above, or each numerical range can be specified in full, i.e. both lower bound and upper bound explicitly stated in the lookup table.

In the example above, the upper bound of each numerical range is either the lower bound of the next numerical range - 1, or the maximum representable value in the case where no next numerical range exists. Here, next refers to an adjacent numerical range that has a lower bound that is greater than the lower bound of the current numerical range. The numerical ranges above are thus: 200000 - 499999, 500000 - 799999, 800000 - 999999.

Although the numerical ranges in the table above are contiguous, it will be appreciated that this is not essential as non-contiguous numerical ranges can also be specified.

This example shows the result of performing the method of Fig. 2 multiple times with different service requests each comprising different sensitive numerical data corresponding to different security zones ('regions' in the table above). Each of said multiple service requests triggers a respective redirect message including an address of a respective server capable of processing said service request. Each piece of address information and corresponding numerical range is stored in the lookup table by merchant device 110.

The lookup table is stored in any location that is accessible to merchant device 110. This could be a local memory of merchant device 110, e.g. a hard drive, solid state drive, memory, etc. of merchant device 110. Alternatively the lookup table can be stored remotely from merchant device 110, e.g. on cloud-based storage accessible to merchant device 110. The storage location of the lookup table is not critical, although preferably a storage location is selected such that merchant device 110 can access the lookup table efficiently; that is, reliable, relatively low latency access to the lookup table is possible.

It should be noted that steps 220 and 225 can be performed in any order, or concurrently.

It will be appreciated that the lookup table above can be used by merchant device 110 in subsequent service requests to enable subsequent service requests to be routed to the correct server of payment network 100 in the first instance, i.e. without first contacting a server of payment network 100 that cannot handle the service request. The latency of subsequent service requests is thus reduced.

Specifically, any subsequent service request associated with a number formed by extracting a sequence of digits from sensitive numerical data from the service request that is within a range contained within the lookup table can be routed to the correct server of payment network 100 in the first instance. This is because the relevant record in the lookup table can be identified and the address of the payment network server appropriate for handling the service request can be obtained from said record.

In the context of the sensitive numerical data being PANs and the numerical ranges being account ranges, any subsequent service request containing a PAN having a BIN / IIN that falls within an account range stored in the lookup table can be routed to the correct server of payment network 100 in the first instance. The correct server in this case is the server associated with the account range that the BIN / IIN falls within, as determined using the lookup table.

Thus, via implementation of the method of Fig. 2, merchant device 110 automatically constructs and maintains a lookup table that serves as a dynamic record of where service requests should be directed within a payment network. This is achieved without burden to the merchant. The lookup table is also specific to merchant device 110 because the lookup table is automatically only populated with data relevant to merchant device 110. This is because each entry in the lookup table is added in response to a service request made by merchant device 110, which service request indicates the relevance of said entry to merchant device 110. The lookup table is thus smaller than manually-maintained lookup tables that contain all possible routing information, leading to reduced storage requirements and also reducing lookup time.

A merchant device located in a particular geographical region may only encounter service requests associated with one or a small number of security zones, meaning that the only routing information that is relevant to such a merchant device pertains to this/these security zone(s). Under existing approaches, the merchant device is required to maintain a routing table that includes many pieces of irrelevant data relating to security zones that the merchant device will likely never interact with. This is cumbersome to maintain and likely to be out of date. As discussed above, the invention addresses this problem by virtue of the fact that the lookup table maintained by merchant device 110 only includes data relevant to the merchant device. The lookup table generated by the invention is therefore significantly smaller than prior art tables and is also automatically maintained such that it is always up to date.

Additionally, since one numerical range can span many possible values of sensitive numerical data, one redirect operation by payment network 100 can be expected to provide up-to-date routing information for many future service requests from the merchant device from which the first service request originated. This is a significant reduction in processing load compared to a scenario in which a payment network server must generates a new service request based on the first service request for any service request that the payment network server cannot itself process.

To give perspective on this reduction in processing load, a BIN / IIN range may span tens of thousands of PANs, hundreds of thousands of PANs or millions of PANs. What may be tens of thousands, hundreds of thousands or even millions of instances of a payment network server generating new service requests in prior art systems can be reduced by the invention to just one redirect message. The saving in terms of computational resource consumption afforded by the invention can thus be significant.

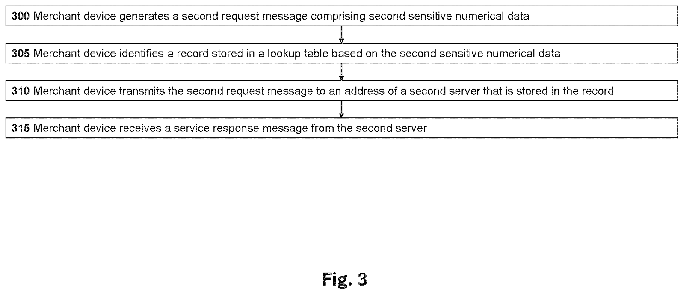

Referring now to Fig. 3, some additional steps relating to handling of a second service request message are discussed. The steps of Fig. 3 are performed in the case where a lookup table of the type discussed above in connection with Fig. 2 is already available to merchant device 110.

In step 300, merchant device 110 generates a second request message as part of a second service request, the second request message comprising second sensitive numerical data. The second request message is of the same format as the first request message. The second sensitive numerical data is of the same format as the first sensitive numerical data but has a different value to the first sensitive numerical data. The second request message can correspond to a token request in respect of a different PAN to the first request message, for example.

In step 305, merchant device 110 identifies a record stored in the lookup table. The record comprises a numerical range that includes a number formed by extracting a sequence of digits from the second sensitive numerical data.

Extraction of the sequence of digits from the second sensitive numerical data can be performed in the same manner as in the case of extraction of the sequence of digits from the first sensitive numerical data. Reference is thus made to the discussion above in this regard.

Identifying the record can involve querying the lookup table using the number formed by extracting a sequence of digits from the second sensitive numerical data to determine whether said number is within any numerical range(s) stored within the lookup table.

Taking the example of the second sensitive data being a PAN and the extracted sequence of digits being a BIN / IIN, step 305 can be understood as identifying that a BIN / IIN of the PAN associated with the second service request is within an account range that is stored in the lookup table.

In the case of more than one record being identified in a lookup operation, merchant device 110 may select the record of the set of identified records that has the most recent creation time or most recent modification time as recorded in the lookup table.

In step 310, merchant device 110 transmits the second request message to an address stored in the record identified in step 305. In the case where the second request message is formatted as an HTTP GET request, the second request message can take the following form where the address "http://server_B.it" corresponds to the address stored in the record identified in step 305:

```
              JHW#2ruljlqdoOsdjh#KWWS2414#
              Krvw=#kwws=22vhuyhubEllw#
              #
              ?kwpoA#
              ?erg|A#
              ý#
              ?FdugSDQA5456#789:#;<34#5678?2FdugSDQA#
              ý#
              ?2erg|A#
              ?2kwpoA#
```

It will be appreciated that the process of Fig. 3 makes use of the already-populated lookup table to correctly identify the server of payment network 100 that is capable of processing the second service request in the first instance. The additional processing effort and latency associated with the redirect request is thus avoided. The process of Fig. 3 is therefore typically performed after the process of Fig. 2 has been performed, since the process of Fig. 2 populates the lookup table.

In step 315, merchant device 110 receives a service response message from the second server (e.g. second server 105b) in response to the second service request. The second service response message is of the same type as the first service response message, such that details are not repeated here.

Some modifications to the methods of Figs. 2 and 3 are now discussed.

Optionally, the first service response message received in step 210 or the second service response message received in step 315 further includes a second numerical range. The second numerical range includes the number formed by extracting a sequence of digits from the first sensitive numerical data. The first/second service response message also includes a start time of the second numerical range; and an address associated with a server configured to process service requests including sensitive numerical data that is within the second numerical range.

The start time of the second numerical range refers to a time at which a server corresponding to the address received in the first/second service response message is able to start processing service requests having sensitive data that corresponds to the second numerical range. The start time can be specified in any suitable form, e.g. using Coordinated Universal Time (UTC).

In the case where the first or second service response message further includes a second numerical range, merchant device 110 can store the second numerical range in the lookup table in association with the start time and the address, e.g. as part of step 225 or step 315.

When the lookup table contains entries that include a start time, identifying a record in the lookup table can be modified as follows.

As part of the lookup operation, merchant device 110 compares a start time of the record with a current time. The current time can be a system time of merchant device 110, for example. In the case where the current time is later than or equal to the start time, merchant device 110 transmits a request message that merchant device 110 is currently processing (e.g. the first or second request message, or a further request message) to an address stored in the record (e.g. the address discussed directly above). In the case where the current time is earlier than the start time, merchant device 110 searches the lookup table for any other records that also have a numerical range that contains the number formed by extracting a sequence of digits from the first sensitive numerical data (i.e. matching records). For each such record identified, merchant device 110 compares the current time to the start time of the record. In the case where the current time is later than or equal to the start time, merchant device 110 transmits a request message that merchant device 110 is currently processing to an address stored in the respective record. In the case where there is no record found in the search with a start time that is earlier than the current time, merchant device 110 transmits the request message to a default server, e.g. first server 105a.

Optionally, in the case where a set of records having a numerical range that contains the number formed by extracting a sequence of digits from the first sensitive numerical data are identified, merchant device 110 attempts to identify a record from the set with the latest start time that is earlier than the current time. If such a record can be identified, this record is used by merchant device 110 to route the request message. If no such record can be identified, merchant device 110 transmits the request message to a default server, e.g. first server 105a. This process can advantageously ensure that the most recently defined record of a set of records is used to route the request message.

Preferably, a record in the lookup table that has no start time is treated as having a start time that is prior to the current system time of merchant device 110, i.e. a record with no start time is treated as currently being in effect.

In the case where multiple records are found to match, preferably record(s) with a start time that is earlier than or equal to the current time take precedence over records having no start time.

In any of the cases above where multiple matching records are identified, merchant device 110 may also use record metadata to select the record that is used to route the request message. For example, a record from a set of matching records that each meet the criteria established above with the most recent creation date or most recent last modification date can be selected for use.

It will be appreciated that use of a start time in this manner enables further control over the routing of request messages. Payment network 100 can provide information relating to an upcoming change to a routing configuration that can be entered into the lookup table of merchant device 110 in advance of the start time of this new routing configuration. When the new routing configuration comes into effect at the start time, merchant device 110 is already aware of this change via its lookup table such that merchant device 110 can immediately begin sending service requests to the correct server within payment network 100.

One scenario in which this is useful is in the context of a BIN split / IIN split. This is where an account range is split into two or more sub-ranges, each respectively associated with a different security zone. For example, a BIN range 000000 - 999999 that is initially associated with a particular region (e.g. Europe) may be split into two sub-ranges, namely 000000 - 499999 and 500000 - 999999, where each sub-range is respectively associated with a different region (e.g. UK and Italy).

An account range can be split into any number of sub-ranges. The example above illustrates an equal split, but this is not limiting as unequal splitting of an account range is also possible.

As an example of this, an exemplary service response message in the case of a BIN split that splits an existing account range into three sub-ranges is shown below. The start time 'Date' indicates that service requests having PANs falling within the account range defined in the 'Old-Account-Range' element that are generated by merchant device 110 on or after 00:00:00 GMT on 2025/01/12 (yyyy/mm/dd format) should be routed according to the new account ranges defined in the service response message.

```
              KWWS2414#533#RN#
              Frqwhgw0W|sh=#wh{w2kwpo#
              Frqwhqw0Ohqjwk=#4567#
              #
              ELQOVsolw=##
              Gdwh=#Vxq#5358#34#45#33=33=33#JPW#>##
              Rog0Dffrxqw0Udqjh=#533333#/#<<<<<<>##
              Qhz0Dffrxqw0Udqjh=#533333#/#67<<<<#>#
              Qhz0Orfdwlrq=#kwws=22vhuyhubE1lw#>#
              Qhz0Uhjlrq=#Lwdo|#>#
              Qhz0Dffrxqw0Udgqjh=#683333#/#7<<<<<#>#
              QhzOOrfdwlrq=#kwws=22vhuyhubFldw#>#
              QhzOUhjlrq=#Dxvwuld#>#
              Qhz0Dffrxqw0Udqjh=#833333#/#<<<<<<#>#
              QhzOOrfdwlrq=#kwws=22vhuyhubglfrlxn#>#
              QhzOUhjlrq=#XN#
              #
              #
              ?kwpoA#
              ?erg|A#
              ý#
              ?$00#Frqwhqw#00A#
              ý#
              ?2erg|A#
              ?2kwpoA#
```

In the case of more than one record being identified in a lookup operation, where each identified record has a start time, merchant device 110 may route the current service request according to the record of the set of identified records with the most recent start time that is prior to the current time.

Referring now to Fig. 4, a method for processing a service request according to an embodiment is shown. This method is described from the perspective of payment network 100 and corresponds to the methods described above.

In step 400, first server 105a of payment network 100 receives a first request message from merchant device 110 as part of a first service request. The first request message comprises an address of first server 105a and first sensitive numerical data. The address and the first sensitive numerical data are of the type discussed earlier.

In step 405, first server 105a determines, based on the first sensitive numerical data, that first server 105a is unable to process the service request.

For example, in the case where the first sensitive numerical data is a PAN, first server 105a may extract a BIN or IIN from the PAN and determine that the extracted BIN / IIN is not part of an account range that first server 105a is authorised to process.

In step 410, first server 105a identifies, based on the first sensitive numerical data, a second server (e.g. second server 105b) of payment network 100 that is able to process the service request. The identification can involve querying a database maintained by an operator of payment network 100, where the database stores ranges of digit sequences in association with payment network server addresses. The query can use a sequence of digits extracted from the first sensitive numerical data in the manner discussed earlier in this specification.

In the case where the first sensitive numerical data is a PAN, the database can store account ranges in association with server address information such that each entry in the database indicates which server of the payment network is authorised to process a service request corresponding to a PAN in the associated account range. An example of this database is shown directly below.

| **Account range** | **Server address** | **Region** |
|---|---|---|
| 000000 - 199999 | https://serverB.it | Italy |
| 200000 - 399999 | https://serverC.at | Austria |
| 400000 - 599999 | https://serverD.co.uk | UK |
| 600000 - 799999 | https://serverE.de | Germany |
| 800000 - 999999 | https://serverF.es | Spain |

In this table the account ranges are divided equally (i.e. each account range has the same size) but this is not essential as the account ranges can alternatively be unequally divided, e.g. based on demand.

Additional information such as the 'region' information shown above can also be stored in the database. A respective identifier of each server, e.g. 'serverB' in the case of first row above, can also be stored in the database. Other information that is considered useful can additionally or alternatively be stored in the database, e.g. a start time of the type discussed above, creation date of the database record.

In the above context, first server 105a extracts a BIN / IIN from the PAN stored in the first service request received in step 400 and identifies an entry in the database that has an account range containing the extracted BIN / IIN. The address information stored in this entry is used to identify the second server that is able to process the service request.

For example, if the extracted BIN is 300000, first server 105a determines from the database that the server with address "https://serverC.at" is configured to process the service request.

The database can also store a default server address, optionally with a corresponding region such as 'default'. The account range for the default server can be set to a value that signifies that it is the default, e.g. a null value, empty value or the full account range (000000 - 999999 in the example above). First server 105a is configured such that the default server address is used only if first server 105a cannot identify any other entry in the database that has an account range containing the extracted BIN / IIN.

It will be appreciated that, by implementing the method of Fig. 2 and optionally also Fig. 3, over time merchant device 110 automatically generates and maintains a partial copy of the database stored by payment system 100. The part of the database obtained by merchant device 110 is the specific part that is relevant to merchant device 110, i.e. the subset of the database that relates to BIN / IIN ranges that contains PANs that merchant device 110 encounters in practice. Merchant device 110 therefore does not have the overhead of manually maintaining a full copy of the database stored by payment system 100, some of which relates to BIN / IIN ranges containing PANs that merchant device 110 will never encounter.

In step 415, first server 105a transmits a redirect message as a response to the first request message to the merchant device 110. The redirect message includes the address of the second server and a first numerical range, wherein a number formed by extracting a sequence of digits from the first sensitive numerical data is within the first numerical range. Reference is made here to the earlier discussion regarding extraction of a sequence of digits, which is equally applicable here.

Continuing with the example above in which the sensitive data included a BIN equal to 300000, the first numerical range included in the redirect message is the account range 200000 - 399999 and the address of the second server is "https://serverC.at". That is, the first numerical range and the server address can be obtained from the database first server 105a can access.

It will be appreciated that, following step 415, merchant device 110 has received sufficient information from first server 105a to a) retransmit the service request to a server of payment network 100 that is able to process the service request and b) route future payment requests having extracted digits that are within the first numerical range directly to a server of payment network 100 that is capable of processing such service requests. As a result, latency of processing of future service requests is reduced and the computational load on payment network 100 is also reduced.

The process of Fig. 4 can also include optional steps 420, 425 and 430.

In step 420, second server 105b of payment network 100 receives the first request message from merchant device 110. The first request message is the same as the first request message received in step 400 other than that the first request message is now addressed to second server 105b.

In step 425, second server 105b processes the first request message and in step 430 second server 105b transmits a service response message to merchant device 110. The processing of the service request and generation of the service response are conventional and as such are not discussed further here.

Optionally, the service response message includes a second numerical range that includes the number formed by extracting a sequence of digits from the first sensitive numerical data; a start time associated with the second numerical range; and an address of a server of the payment network that is configured to process service requests having sensitive numerical data corresponding to the second numerical range. Reference is made to the discussion above regarding service response messages including start times, which is equally applicable here.

It will be appreciated that the embodiments described above in method form can be encoded in a computer-readable format, such as a set of instructions stored on a computer readable medium. When the instructions are executed by a processor, the processor performs the method of the respective embodiment. The computer readable medium may be a non-transitory computer readable medium. Multiple processors may execute a respective part of the instructions to perform the corresponding part of the method according to the respective embodiment above.

It will also be appreciated that the embodiments described herein are purely illustrative and hence are susceptible to many modifications, substitutions, additions and the like. All such modifications, substitutions and additions are within the scope of the invention which is defined by the appended claims. Method steps described in this specification may be implemented in any order, in parallel or sequentially, unless specifically stated otherwise.

## Claims

1. A computer-implemented method for processing a service request in a payment network, the method comprising:
generating, by a merchant device, a first request message as part of a first service request, the first request message comprising an address of a first server and first sensitive numerical data;
transmitting, by the merchant device, the first request message to the address of the first server;
receiving, by the merchant device, a redirect message from the first server in response to the first request message, the redirect message including an address of a second server and a numerical range, wherein a number formed by extracting a sequence of digits from the first sensitive numerical data is within the numerical range;
responsive to receiving the redirect message, sending, by the merchant device, the first request message to the address of the second server;
receiving, by the merchant device, a first service response message from the second server; and
storing, by the merchant device in a lookup table, the address of the second server in association with the numerical range.

2. The computer-implemented method of claim 1, further comprising:
generating, by the merchant device, a second request message as part of a second service request, the second request message comprising second sensitive numerical data;
identifying, by the merchant device, a record stored in the lookup table, the record comprising a numerical range that includes a number formed by extracting a sequence of digits from the second sensitive numerical data; and
transmitting the second request message to an address stored in the record.

3. The computer-implemented method of claim 1 or claim 2, wherein the first service response message further comprises:
a second numerical range that includes the number formed by extracting a sequence of digits from the first sensitive numerical data;
a start time associated with the second numerical range; and
an address of a server within the payment network;
wherein the method further comprises:
storing, by the merchant device in the lookup table, the address contained within the first service response message in association with the second numerical range and the start time.

4. The computer-implemented method of claim 2, further comprising:
receiving, by the merchant device, a second service response message from the second server in response to the second service request;
wherein the second service response message comprises:
a second numerical range that includes the number formed by extracting a sequence of digits from the second sensitive numerical data;
a start time associated with the second numerical range; and
an address of a server within the payment network;
wherein the method further comprises:
storing, by the merchant device in the lookup table, the address contained within the second service response message in association with the second numerical range and the start time.

5. The computer-implemented method of claim 3 or claim 4, further comprising:
generating, by the merchant device, a further request message as part of a further service request, the further request message comprising further sensitive numerical data;
identifying, by the merchant device, a record stored in the lookup table, the record comprising an account range that includes a number formed by extracting a sequence of digits from the further sensitive numerical data;
comparing, by the merchant device, a start time of the record with a current time; and
in the case where the current time is later than or equal to the start time, transmitting the further request message to an address stored in the record;
in the case where the current time is earlier than the start time, transmitting the further request message to an address of a default server.

6. The computer-implemented method of any one of claims 1 to 5, wherein the first sensitive numerical data is a primary account number, PAN, or a part of a PAN, the number formed by extracting a sequence of digits from the first sensitive numerical data is a bank identification number, BIN, or an issuer identification number, IIN, and the numerical range is an account range.

7. The computer-implemented method of any one of claims 1 to 6, wherein the redirect message is a Hypertext Transfer Protocol, HTTP, response message having status code 302.

8. A computer-implemented method for processing a service request in a payment network, the method comprising:
receiving, by a first server of a payment network, a first request message from a merchant device as part of a first service request, the first request message comprising an address of the first server and first sensitive numerical data;
determining, by the first server based on the first sensitive numerical data, that the first server is unable to process the service request;
identifying, by the first server based on the first sensitive numerical data, a second server of the payment network that is able to process the service request; and
transmitting, by the first server to the merchant device, a redirect message as a response to the first request message, the redirect message including an address of the second server and a first numerical range, wherein a number formed by extracting a sequence of digits from the first sensitive numerical data is within the first numerical range.

9. The computer-implemented method of claim 8, further comprising:
receiving, by the second server of the payment network, the first request message from the merchant device;
processing, by the second server, the first request message; and
transmitting, by the second server to the merchant device, a service response message.

10. The computer-implemented method of claim 9, wherein the service response message includes:
a second numerical range that includes the number formed by extracting a sequence of digits from the first sensitive numerical data;
a start time associated with the second numerical range; and
an address of a server of the payment network that is configured to process service requests having sensitive numerical data corresponding to the second numerical range.

11. The computer-implemented method of any one of claims 8 to 10, wherein first sensitive numerical data is a primary account number, PAN, or a part of a PAN, the number formed by extracting a sequence of digits from the first sensitive numerical data is a bank identification number, BIN, or an issuer identification number, IIN, and the numerical range is an account range.

12. The computer-implemented method of any one of claims 8 to 11, wherein the redirect message is a Hypertext Transfer Protocol, HTTP, response message having status code 302.

13. A merchant device configured to implement the method of any one of claims 1 to 7.

14. A payment network server configured to implement the method of claim 8.

15. A payment network, comprising a first server and a second server, wherein the payment network is configured to implement the method of any one of claims 8 to 12.
